# EUROPEAN PATENT SPECIFICATION

(11) **EP 2 382 446 B1**
(45) Date of publication and mention of the grant of the patent: **09.01.2019**
(21) Application number: 09760841.8
(22) Date of filing: 24.11.2009
(51) Int. Cl.: G01D 5/347

(54) **METHOD FOR MOUNTING A MODULAR ROTARY ENCODER AND A MODULAR ROTARY ENCODER**
VERFAHREN ZUM ANBRINGEN EINES MODULAREN DREHMELDERS UND MODULARER DREHMELDER
PROCÉDÉ PERMETTANT DE MONTER UN ENCODEUR ROTATIF MODULAIRE ET ENCODEUR ROTATIF MODULAIRE

(30) Priority: 26.12.2008 JP 2008333701
(43) Date of publication of application: 02.11.2011
(73) Proprietor: Dr. Johannes Heidenhain GmbH, 83301 Traunreut (DE)
(72) Inventor: NAKAMURA, Yoshiyuki, Kanagawa 243-0303 (JP); OKUYAMA, Akihisa, Tokyo 194-0212 (JP)
(86) International application number: PCT/EP2009/065735
(87) International publication number: WO 2010/072498

(56) References cited:
- DE-A1- 19 509 130
- JP-A- 2003 014 497
- US-A- 5 057 684
- US-A1- 2006 208 682
- US-A1- 2008 197 729

## Description

The present invention relates to a method for mounting a modular rotary encoder.

Rotary encoders convert the amount of mechanical rotational displacement and the number of revolutions around a rotation axis into electrical signals and output them. For simplicity, such rotary encoders are also referred to below as encoders. In such an encoder, the part that converts the mechanical rotation displacement amount into an electrical signal includes a code disc and an electrical circuit unit with detection elements and circuits. Thus the mutual displacement of two rotating items is converted to an electrical signal for output and further processing.

There exist many configurations for rotary encoders, among those are, e.g., modular rotary encoders with separate components, such as code discs and scanning heads with electrical circuit units. These components are presented separately to the user who assembles them. Such modular rotary encoders do normally consist of the smallest possible functional parts so that costs as well as space can be minimized.

An example for the configuration of a modular rotary encoder is described in Japanese Patent Application Publication No. 2002-195853. This type of modular rotary encoder is fixed to the object subject to measurement via a fixing platform and has a circuit board attached. The circuit board has electrical parts and light receiving elements mounted on it. Moreover, a code disc is disposed on the rotating shaft of the object subject to measurement. Light emitting elements, light receiving elements, and a fixed slit plate are arranged stationary with respect to the code disc. The light emitted from the light emitting element is input to the light receiving elements via the slit in the fixed slit plate and the slits in the code disc. Then, due to the rotation of the axis, light is input to the light receiving elements according to the specific slit pattern provided on the code disc. An electrical signal, e.g., in the form of code pulses, is generated corresponding to the rotational movement.

By mounting this type of modular rotary encoder on a rotatable body, e.g., the rotatable shaft of a motor, the functionality of the encoder is established. In other words, even if there is no encoder shaft and no encoder bearing (or encoder cover), the functionality of an encoder is established by using the functional parts on the opposite member.

During the manufacturing process, modular rotary encoders are assembled together by mounting the code disc unit and the scanning head together with a special tool. Then, after checking the encoder functions, the arrangement is disassembled and the units are presented in a disassembled state to the user. The user who purchases a modular rotary encoder can realize the encoder function by mounting it on the rotational axis of the object to be measured, e.g., on the drive shaft of a motor.

Regarding the performance of the encoder, one of the most important features is the accuracy of the output signal waveform. The signal precision is dependent, for example, on the precision of the code disc that is used to detect the revolutions of the object to be measured and the surrounding configuration. It depends furthermore on the mounting precision of the electrical circuit unit, including the signal processing unit and the detector elements, on the object to be measured, and the detection accuracy of the code disc. In the case of a modular rotary encoder, the most important item is the accuracy of mounting of the electrical circuit unit, which includes the signal processing unit, the detector elements, etc., on the object to be measured.

The significant influence of the mounting accuracy on the precision of the output signal waveform creates a complex problem for the user, even though this is a problem that the manufacturer can resolve relatively easily. This is because there exists great demands the general user must meet while he is typically not familiar with the configuration of the encoder and its characteristics at the time that the encoder is mounted on the object to be measured.

As indicated above, the manufacturer of the modular rotary encoder assembles it once and checks its functionality as a completely assembled encoder. If it is disassembled and can be reassembled in the same manner, there is no problem. However, due to high mounting precision requirements, a technically complicated procedure for the user may result.

In order to address these issues, a special mounting method for a rotary encoder is described, for example, in Japanese Patent Application Publication No. S62-147315. The encoder includes a rotatable code disc which has a code disc pattern and a fixed photodetector/mask assembly which reads the code disc pattern in order to generate an electrical signal that representative for the shaft location. A method is described for dispensing with the need for accurate alignment of the printed circuit board and the code disc. For that purpose, first the photodetector/mask assembly and the leads for the photodetector are inserted. Then suitable calipers or spacers must be pushed in between the printed circuit board, where the photodetector/mask assembly is mounted, and the code disc to ensure that there is a suitable spacing. After correct positioning of the printed circuit board, the leads need to be soldered.

However, in this mounting method, the user must decide the location for the photodetector assembly and the leads for the mask. Accordingly, this task is considered complicated and cumbersome. Moreover an accurate visual determination is necessary to decide the correct location of the mask and the code disc on the basis of several alignment marks. Such a visual determination requires certain proficiency and is not necessarily an easy operation. In addition, not only the photodetector/mask assembly is difficult to position but also the code disc might be mounted slanted due to the use of calipers or spacers for the gap adjustment. Therefore, it is difficult to provide an encoder which has detector functionality on the base circuit board itself, especially when the circuit board has multiple sensors at different locations.

A further example for a mounting method for a rotary encoder is known from Japanese Patent Application JP 2003-014497A. The adjustment of the correct position of the code disc along the axial direction is achieved by moving a disc hub together with the code disc along this direction and fixing the disc hub with a fixing screw to the rotating shaft. In order to access the fixing screw from radial direction a certain space is required for mounting the respective encoder.

It is an object of the present invention to provide a method for mounting a modular rotary encoder that provide the user with the ability to easily reproduce the necessary alignment operations while mounting the modular rotary encoder.

These objects are accomplished by a modular rotary encoder mounting method with the features of claim 1.

Further advantageous embodiments of the present invention are characterized in the dependent claim.

The method for mounting a modular rotary encoder on the member or object that is to be measured includes: (a) disposing the code disc on a shaft; (b) adjusting a position of the code disc along the rotation axis of the shaft so as to cause the distance to the member or object to measure a predetermined value; and (c) fixing the electrical circuit unit to the member or object.

The code disc may be mounted on a disc hub by pressure contact. The tip of the shaft may be fixed to the disc hub by a terminal locking device. The disc hub with the code disc may be moved by sliding it along the axial direction to adjust the code disc position.

It may be possible that the rotation axis of the shaft to which the code disc is mounted corresponds to the rotation axis of the object to the measured. In addition, the code disc may be press fit on the shaft and then moved by sliding in the axial direction to adjust the distance to the object to be measured.

The code disc may be mounted on a disc hub, and the disc hub may have a locking tool mechanism to fix the shaft to the disc hub. The disc hub with the code disc may be affixed to the shaft, and the position of the disc hub may be adjusted by slidably moving the shaft along the axial direction. Then, the disc hub is fixed to the shaft by the locking tool mechanism.

The position adjustment may be performed using a spacer or a jig.

The position adjustment may be performed by arranging the code disc perpendicularly opposed to the electrical circuit unit.

Complementary male and female fittings may be formed on the mounting surfaces of the electrical circuit unit and the object to be measured, and the position adjustment may be performed at the location of the fittings. Then, the electrical circuit unit is moved to and fixed at a location where the mutually fittings cannot be mutually fitted.

The spacer may be interposed between the electrical circuit unit and the object to be measured.

Thus, an easy mounting method for a modular rotary encoder is provided. The mounting method ensures accurate positioning by a simple adjustment operation.

According to example embodiments of the present invention, a mounting method for a modular rotary encoder includes mounting the code disc on a shaft which is connected with the (rotatable) object that is to be measured. The location of the code disc is then adjusted in the axial direction of the rotatable shaft axis. Then, the electrical circuit unit is mounted. By simplifying the adjustment operation of the code disc in the axial direction of the rotatable shaft axis, the adjustment operation is very easy. By fitting the code disc via a disc hub to the shaft , the space for mounting the encoder as well as the encoder specifications can be appropriately selected.

In example embodiments of the present invention, the code disc is fitted to the shaft via a disc hub. Within the disc hub there is a terminal locking device which is in connection with the tip of the shaft. Thus, the different axes on the encoder side and on the object side are locked together. In addition, the code disc is mounted by pressure contact to the disc hub and is slidably moved in the axial direction to adjust its position or height. In this manner, the code disc is press fit to the disc hub. Due to mounting the code disc by pressure contact, the entire configuration is simplified. This allows the reduction in size of the modular rotary encoder. Moreover, the position or height adjustment of the code disc is very simple, since it only involves a sliding movement in the axial direction.

The pressure contact of the code disc means that the mounting hole for the code disc and the disc hub are contacted and reach a locked/fixed state by mutual frictional resistance. In other words, in mounting the code disc, the disc hub is pushed into the mounting hole to reach a fixed state. Because the code disc is lightweight and small, it can be fixed in a sufficiently stable manner by merely attaching it to the disc hub by pressure.

A spacer or jig may be to adjust the position or height of the code disc. The height may also be measured using a measuring tool before adjusting it. A high precision location output may readily provided by using a spacer or a tool. Moreover, the height adjustment of the code disc may be performed by arranging the code disc perpendicular to the electrical circuit unit. At that time, the electrical circuit unit is fixed, as is, on the mounting surface of object to be measured. Then after the code disc is fixed, a spacer is inserted in between the electrical circuit unit and the mounting surface. In other words, the electrical circuit unit is caused to be higher only by the amount of the spacer, and is separated from the code disc by a distance corresponding to the thickness of the spacer. In this situation also, if the width of the spacer is equal to the required gap, just as in the case with the projecting parts described above, the gap can be easily adjusted in a similar manner as the projecting parts as described above.

The modular rotary encoder may be arranged as an optical encoder. Thus, it is possible to arrange the code disc in a transmissive variant in a sandwich configuration between light emitting elements and light reception elements. Alternatively, it is possible in a reflective variant to arrange the light emitting elements and the light reception elements on one side of the code disc where the reflected light can be detected. Furthermore the electric circuit unit may include an electrical circuit board with several electrical circuits for driving different electric elements, for amplifying and/or rectifying the derived signals or for generating timing signals. If the modular rotary encoder is arranged as a magnetic encoder, the detection elements are disposed on the electric circuit board. Furthermore, it is also possible to use an inductive scanning principle in the modular rotary encoder.

In the modular rotary encoder, semiconductor light emitting elements such as light emitting diodes (LED), laser diodes (LD), etc. may be utilized as light emitting elements. Furthermore, semiconductor light reception elements, such as phototransistors, photo-diodes, etc. may be utilized as light reception elements.

If a magnetic scanning principle is used, magnetic detection elements and magnetic circuit parts are provided.

If an inductive scanning principle is used, appropriate induction detection circuits as well as suitable winding patterns are provided.

If an optical scanning principle is used, the code disc is arranged as a disc-shaped slit plate having optical transmitting parts (so-called slits) and optical non-transmitting parts or reflecting and non-reflecting parts. Thus, incremental signals and absolute signals can be derived by scanning the code disk, e.g., in a conventional manner.

If a magnetic scanning principle is used, the same signals can be generated as with the optical code disc described above. For that purpose, it is possible to combine coarse and fine materials to generate appropriate magnetic force lines; alternatively, it is possible to combine magnetic materials and nonmagnetic materials as a magnetic-generating arrangement and a nonmagnetic-generating arrangement.

If an inductive scanning principle is used, a suitable winding pattern is required to cause induction effects.

Further features and aspects of example embodiments of the present invention are described in more detail below with reference to the appended Figures.
- Figure 1: is an elevational view showing a mounting process of an example embodiment of the present invention.
- Figure 2: is an elevational view further showing the mounting process.
- Figure 3: is an elevational view further showing the mounting process.
- Figure 4: is an elevational view further showing the mounting process.
- Figure 5: is a plan view of an assembled encoder.
- Figure 6: is an elevational view of the assembled encoder shown in Figure 5.
- Figure 7: is an elevational view showing a mounting process of an example embodiment.
- Figures 8a: is a plan view further showing the mounting process.
- Figure 8b: is an elevational view further showing the mounting process.
- Figure 9a: is a plan view further showing the mounting process.
- Figure 9b: is an elevational view further showing the mounting process.
- Figure 10a: is a plan view further showing the mounting process.
- Figure 10b: is an elevational view further showing the mounting process.
- Figure 11: is a plan view showing an assembled encoder.
- Figure 12: is an elevational view of the assembled encoder shown in Figure 11.
- Figure 13: is an elevational view showing a mounting process an example embodiment.
- Figure 14a: is a perspective view further showing the mounting process.
- Figure 14b: is an elevational view further showing the mounting process.
- Figures 15a and 15b: are elevational views further showing the mounting process.
- Figure 16: is an elevational view further showing the mounting process.
- Figure 17: is a plan view of an assembled encoder.
- Figure 18: is an elevational view of the assembled encoder shown in Figure 17.
- Figure 19: is an elevational view showing a mounting process according to an example embodiment.
- Figure 20: is an elevational view further showing the mounting process.
- Figure 21: is an elevational view further showing the mounting process.
- Figure 22: is an elevational view further showing the mounting process.
- Figure 23: is a plan view of an assembled encoder.
- Figure 24: is an elevational view of the assembled encoder shown in Figure 23.
- Figure 25: is a perspective view of an electrical circuit unit of an encoder according to an example embodiment.
- Figure 26: is a perspective view of a motor, which corresponds to an object to be measured.
- Figure 27: is a perspective view of an electrical circuit unit in a modified state fitted to a motor.
- Figure 28: is a perspective view of an electrical circuit unit in a final state fixed to a motor.

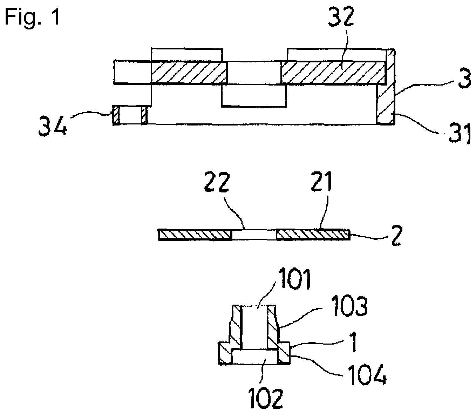

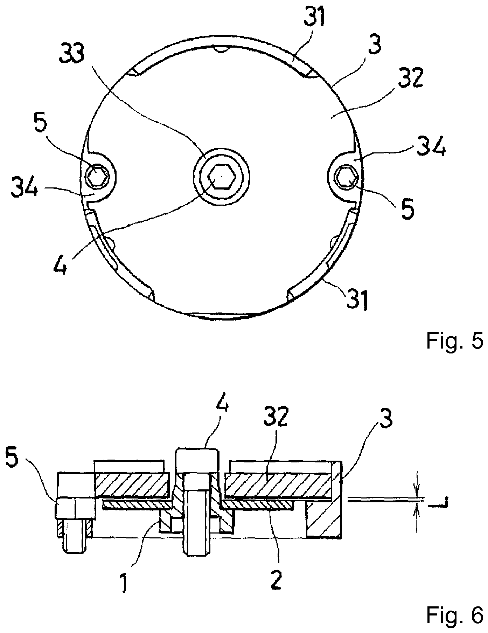

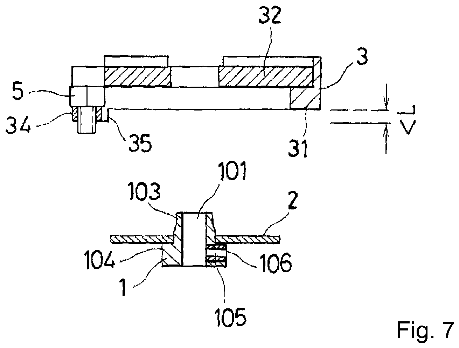

Figures 1 to 6 show an example embodiment of the present invention. In this regard, Figures 1 to 4 are elevational view of a mounting process, Figure 5 is a plan view of an assembled modular rotary encoder, and Figure 6 is an elevational view, in partial cross-section, of the assembled encoder shown in Figure 5. The examples described with reference to figures 7 to 28 are not part of the present invention.

The modular rotary encoder includes an electrical circuit unit 3, a code disc 2, and a disc hub 1. The disc hub 1 is attached to the rotating shaft 11 which is coupled with the object to be measured and which has the function of causing the code disc 2 to rotate. The disc hub 1 has a shaft insertion part 102 with a diameter corresponding to that of the shaft 11 from the object to be measured 10. Furthermore the disc hub 1 has a securing hole 101 having an inner diameter that is smaller than the shaft insertion part 102 via the internal diameter stepped parts. Moreover, the circumferential parts of the disc hub 1 have a wide diameter part 104 whose outer diameter is larger than the shaft insertion part 102. Furthermore, the circumferential parts of the disc hub 1 have a code disc attachment part 103 whose shape is smaller due to the outer diameter stepped parts. In this example embodiment, the tip of the code disc attachment part 103 of the disc hub 1 is formed in a tapered shape with gradually increasing diameter and a shape that permits easy insertion of the code disc 2.

The material of the disc hub 1 is not particularly limited, and as long as the required strength can be obtained it may be a metal material, a resin material, etc. Moreover, for example, if the material of the code disc attachment part 103 is an easily pressure contacted or pressure adhered material, the other parts may be made of metal in a hybrid configuration. The outer diameter of the code disc attachment part 103 is preferably the same as the inner diameter of the code disc mounting hole 22. Alternatively, it might also be slightly larger. The dimensional relationship may be such that a certain amount of force must be applied to insert the code disc 2 sufficient to generate pressure contact force or frictional force so that these elements are held and maintained together by pressure contact.

The code disc 2 is formed from one sheet of disc shaped material with a hole. A code pattern is formed on the signal surface 21 of the code disc 2, sufficient to generate a specific pattern which is required for measurement. The material of the code disc 2 may be provided from one single material, or may be formed from combinations of multiple materials. For example, in the case of an optical scanning principle, combinations of translucent materials and opaque materials, or combinations of reflective and photo-absorbing materials, etc., may be used, as long as they are capable of generating incremental or absolute signals. Moreover, in the case of a magnetic scanning principle, suitable code patterns may be formed by combining magnetic and nonmagnetic materials. Furthermore, in the case of an inductive scanning principle, an induced current may be generated to provide the required measurements by forming a specific winding pattern as a code pattern and combining conductive materials on insulating materials. Usually, the signal surface 21 of the code disc 2 is directed to the reverse surface of the circuit board 32 of the electrical circuit unit 3. Moreover, the mounting hole 22 of the code disc 2 is formed in the vicinity of the rotation center where the code disc attachment part 103 can be inserted.

The electric circuit unit 3 includes a base unit 31 and a circuit board 32. The base unit 31 supports the circuit board 32 fixed on the mounting surface in the electrical circuit unit 3. Optical or magnetic detection elements, a fixed slit plate and/or winding patterns for induction detection are arranged on the circuit board 32, as required, in order to detect the code pattern on the code disc 2. Furthermore, amplifier elements, circuit elements, digital circuit elements for computation and signal processing can also be mounted on the circuit board 32 to allow the necessary processing of the signals generated by the detection elements. Furthermore, external circuits and connectors required to connect the encoder to a power source, etc., may also be provided as required.

The method for mounting the modular rotary encoder is explained below.

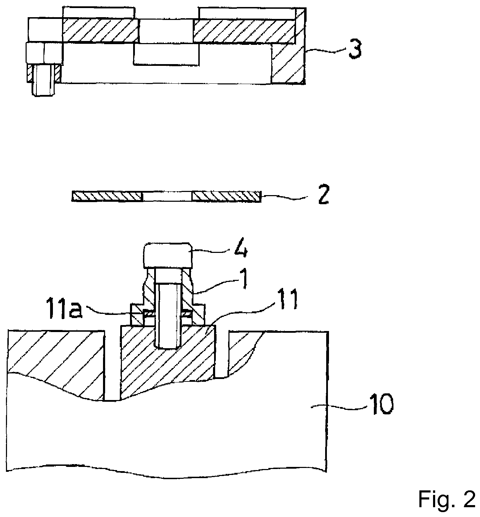

As shown in Figure 2, the disc hub 1 is mounted on the shaft 11 which is related to the object to be measured, e.g., a motor.

Because the location adjustment of the disc hub 1 itself is not performed, the disc hub 1 is simply attached to the shaft 11. At this time, the protruding parts 11a of the shaft 11 are inserted in the shaft insertion part 102 of the disc hub 1. Thus, the lower terminal parts of the disc hub 1 and the upper terminal parts of the protruding parts 11a of the shaft 11 are contacted. Then, the axis mounting screw 4 is inserted in the securing hole 101 of the disc hub 1 from the upper direction, and screwed into the screw hole provided in the shaft 11.

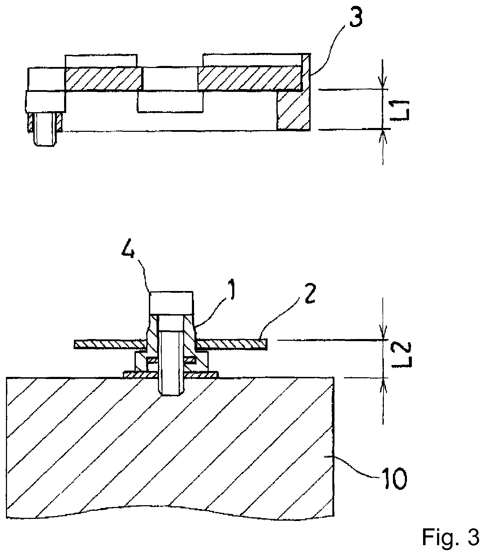

Next, as shown in Figure 3, the mounting hole of the code disc 2 is pressed into the code disc attachment part of the disc hub 1 from the upper side to attach the code disc 2 to the disc hub 1. At this time, the position or height of the signal surface of the code disc 2 is adjusted so as to be a predetermined distance L2 from the mounted surface of the object to be measured 10. This height L2 of the code disc 2 is spaced apart a predetermined gap L from the lower extreme surface of the circuit board of the electrical circuit 3, or height L1 from the detector element unit mounted thereon, or the lower extreme surface of any element or circuit performing a similar function. In other words, the height L2 of the attached code disc 2 is separated by a gap L or less from the height L1 of the circuit board of the electrical circuit 3. The location of the code disc 1 can easily be adjusted by using a jig, etc.

Due to the fact that the disc hub 1 and the code disc 2 are merely press fitted, the adjustment of the height of the code disc 2 can be achieved simply by sliding the code disc 2 in the axial direction of the rotation axis of shaft 11. On the other hand, even if the disc hub 1 and the code disc 2 are only press adhered there is a sufficient holding strength/frictional force to hold the code disc 2 without a problem. Moreover, after adjusting height and position, the code disc 2 may be adhered to encoder axis 1 in order to improve reliability. For height adjustment and location determination of the code disc 2, a tool may be employed to simplify the operation in an attempt to improve efficiency and precision, as well as increasing reproducibility. When a tool is utilized, either the height of the lower surface side of the code disc 2 or the height of the upper surface side may be controlled.

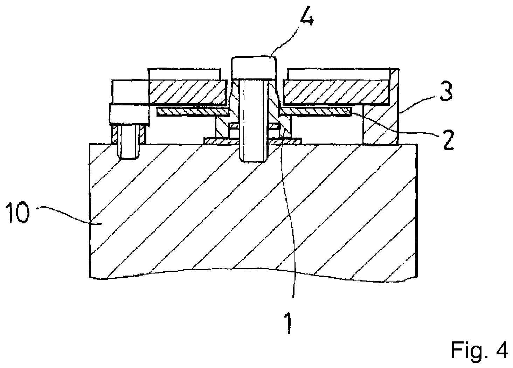

As shown in Figure 4, the electrical circuit unit 3 is fixed to the mounting surface of the object to be measured 10. As shown in Figures 5 and 6, the electrical circuit unit 3 is fixed by fixing screws 5 via the mounting holes 34 of the base unit 31. At this time, the height L1 of the circuit board 32 is fixed with respect to the base unit 31, because its location is automatically determined by the relationship with the base unit 31. It is sufficient to precisely dispose the code disc 2 by a gap amount L below the height L1 of the circuit board 32. Accordingly, the location of each unit may be determined and fixed precisely and easily, and even inexperienced technicians can assemble the modular rotary encoder with sufficient reproducibility. A through hole 33 is formed in circuit board 32 for mounting screw 4.

A characteristic of this arrangement is the use of a terminal locking mechanism for fixing the disc hub to the tip of the rotating shaft. Since there is no need for a fixing screw, no space is required for that type of locking device. Thus, a more compact configuration can be provided. In addition, the fixing operation of each unit can be performed from the axial direction of the object 10. In other words, because both the code disc 2 and the electrical circuit unit 3 are fixed from the axial direction, the need for provision of operational space in the radial direction (e.g., side direction) is eliminated. This also contributes to the compactness of the arrangement. Otherwise, if a fixing screw would be required in order to fix the code disc 2 to the disc hub 1, then a part of the electrical circuit unit 3 would have to be opened up to provide space to perform the screw securing operation from the radial direction. The described modular rotary encoder however eliminates that need and therefore further miniaturization is possible.

The code disc 2 is attached to shaft 11 via the disc hub 1. However, in some situations, the code disc 2 may also be press fit to the shaft 11. In that situation, it is possible to omit the disc hub 1 as described above and the parts which correspond to the disc hub 1 would be replaced with the shaft 11. By omitting the disc hub 1, the removal of the code disc 2 would become more troublesome and the mounting process would also become more troublesome. However, the number of parts could be reduced and such an arrangement would allow for a more compact configuration.

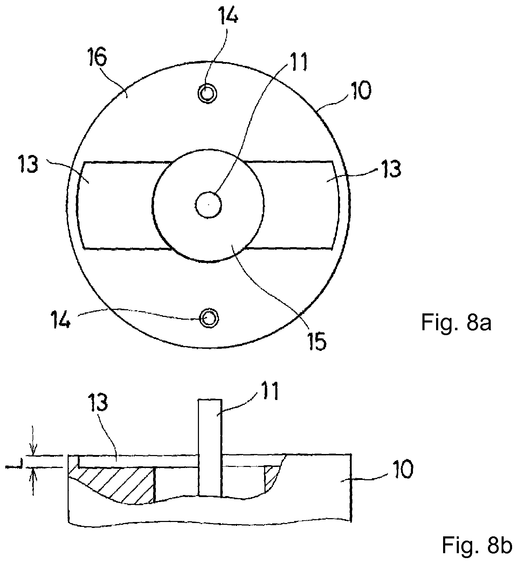

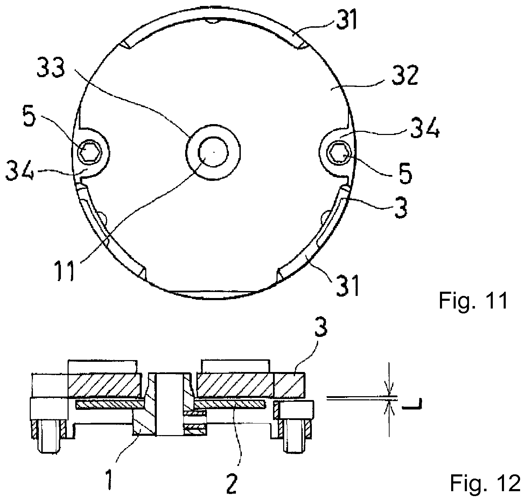

Figures 7 to 12 show an example embodiment. Figures 7, 8b, 9b, and 10b are elevational views showing the mounting process, Figures 8a, 9a, and 10a are plan views showing the mounting process, Figure 11 is a plan view showing the assembled encoder, and Figure 12 is an elevational view showing the assembled encoder. In Figures 7 to 10, the same constitutive components have the same reference numerals applied to them in Figures 1 to 6.

As illustrated in Figure 7, the encoder has an electrical circuit unit 3, a code disc 2, and a disc hub 1. Disc hub 1 has locking tool mechanism in order to fix it to the shaft 11 of the object to be measured 10.

In other words, the disc hub 1 is penetrated above and below by the inner diameter of the shaft insertion part which corresponds to the outer diameter of the shaft 11 of the object 10. The disc hub 1 has an expanded diameter part 104 whose outer periphery parts have a larger diameter. Furthermore, the code disc attachment part 103 of the disc hub 1 has a shape which gets smaller via the outer diameter stepped parts. The expanded diameter part 104 of the disc hub 1 has a securing screw hole 105 piercing it radially from the outer peripheral portion to the shaft insertion part. A securing screw 106 is screwed into securing screw hole 105. By the securing screw hole 105 and the securing screw 106, the shaft 11 is fastened and fixed to the disc hub 1, thus providing a locking tool mechanism.

Moreover, the code disc 2 is already fixed on the disc hub 1. The fixing procedure is not particularly limited and the code disc may be fixed by, e.g., conventional methods of adhesion, securing by screw, welding, melt adhering, etc. Furthermore, as shown in Figures 8a and 8b, a recess 13 is formed on a part of the mounting surface of the object 10. Protruding parts 35 corresponding to the recess 13 are formed on the base unit 31 of the electrical circuit unit 3. In other words, by adjusting the location of the electrical circuit unit 3, the protruding parts 35 are arranged to fit into the recess 13. The depth of the recess 13 corresponds to the gap width L between the code disc 2 and the electrical circuit unit 3, while the height of the protruding parts 35 is formed to be the same as the depth of the recess 13 or greater. In other words, the protruding parts 35 may be larger than the size which fits in the recess 13.

The assembly method is further explained below. According to Figures 8a and 8b, the recess 13 as described above is formed in a part of the mounting surface 16 of the object 10 which is, e.g., a motor, etc. This recess 13 is formed in this example by drilling out a portion surrounded by two parallel lines in the center of the rotation axis and disc shaped lines at the outer periphery of the object 10. The depth L of the recess 13 corresponds to the width of the required gap L between the code disc 2 and the electrical circuit unit 3. In this example, the shaft 11 is a cylindrically-shaped bar with no stepped parts. In its periphery, a concentric-circle-shaped specific area is removed from the object 10 to form a cut-out part 15 in the mounting surface 16. This cut-out part 15 prevents interference with the disc hub 1 and has a so-called escape-hole function. Moreover, screw holes 14 are formed in the planar mounting surface 16.

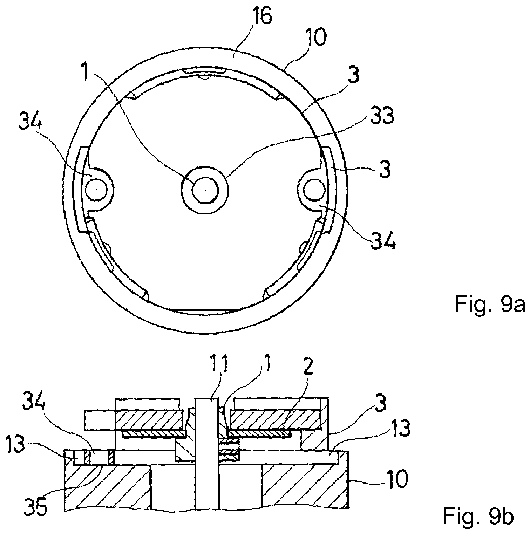

Next, as shown in Figures 9a and 9b, the disc hub 1 with the code disc 2 mounted on it is inserted from the upper side of the shaft axis 11 to attach the disc hub 1 to the shaft 11. At that point, the disc hub 1 is not yet in a fixed state. Then, the electrical circuit unit 3 is disposed on the mounting surface 16 of the object 10. At this point, the electrical circuit unit 3 is not yet fixed and its protruding parts 35 are adjusted to a position to fit properly into the recess 13. In this example, the protruding parts 35 are formed in the part where mounting holes 34 are formed in the electrical circuit unit 3. When the protruding parts 35 of the electrical circuit unit 3 fit into the recess 13 and the depth of the recess 13 is lessened by an amount L, the lower extreme surface of the circuit board 32 is also lowered into a position by an amount L. In this state, the code disc 2 fixed to the disc hub 1 is adjusted to cause it to project toward the lower surface of the circuit board 32 of the electrical circuit unit 3. The disc hub 1 is fixed to shaft 11 by the securing screw 106.

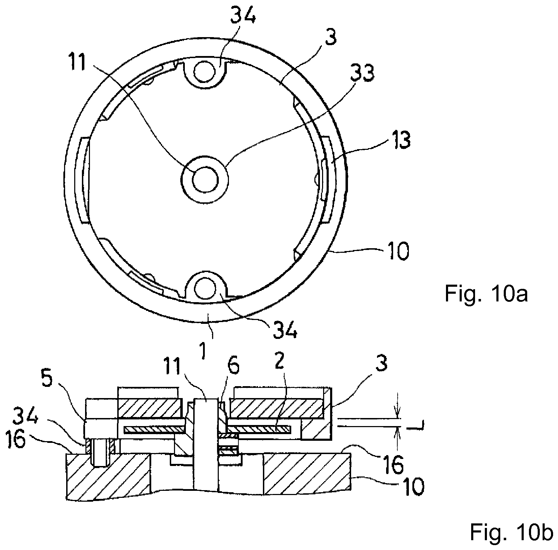

Next, as shown in Figures 10a and 10b, electrical circuit unit 3 is raised up, and protruding parts 35 are removed from recess 13. The entire arrangement is pivoted a specific radial angle to locate it on the mounting surface 16 where there are no recessed parts and then fixed. In the example illustrated, the electrical circuit unit 3 is revolved 90º to locate it. Because the screw holes 14 are formed for mounting opposite to the mounting holes 34, the electrical circuit unit 3 can be fixed in this position. At this point, projecting parts 35 are touching the flat mounting surface 16 in the vicinity of the screw holes 14. Thus, the height of the lower extreme surface of the electrical circuit unit 3 is also higher by an amount equal to the depth L of the recess 13 and is separated from the code disc 2 by a gap with a width L.

This arrangement provides, in a very simple manner, the precise determination of the fixing location of each unit, and even operators without particular experience and skill can assemble the arrangement in a highly reproducible manner. This arrangement also provides the continued use of the existing parts and the existing design with only a slight modification. Because it employs a jig which operates to determine the location of the electrical circuit unit 3, assembly with easy reproducibility is provided without the need for special tools. Only the cutting-out of the recess on the object 10 and the arrangement of the protrusions on the electrical circuit unit 3 are required. If their geometrical arrangement is predetermined, they can be formed at the same time as their manufacture. Accordingly, any additional expenditure is relatively minor.

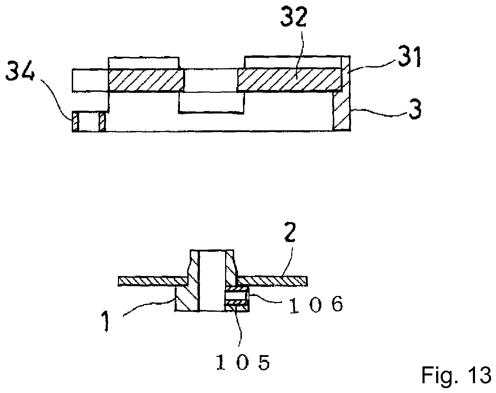

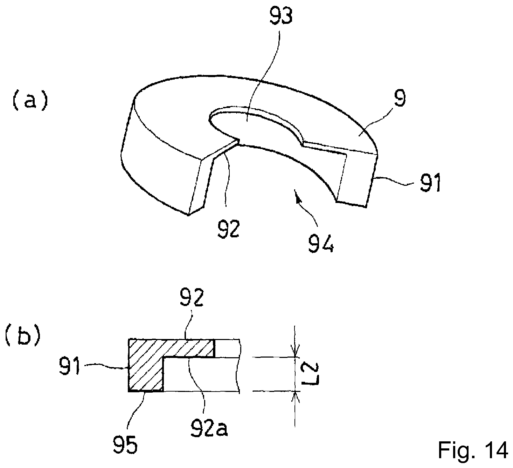

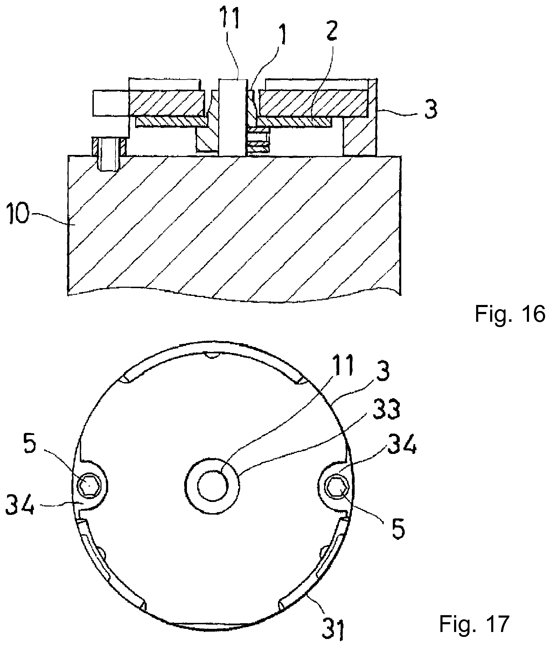

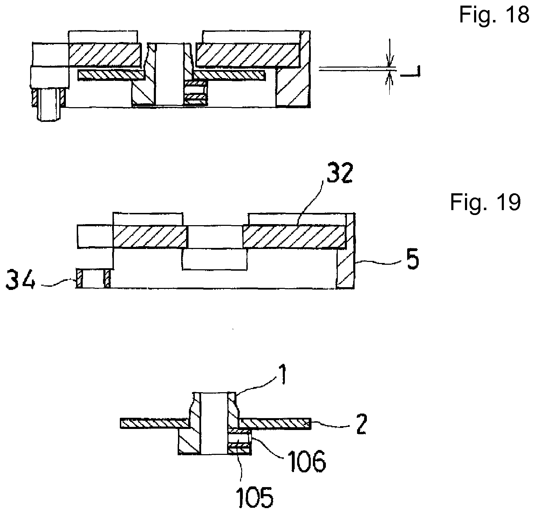

Figure 13 to 18 show an example embodiment. Figures 13, 14b, 15, and 16 are elevational views showing the mounting process, Figure 14a is a perspective view showing the mounting process, Figure 17 is a plan view of an assembled encoder, and Figure 18 is an elevational view of the assembled encoder. Moreover, Figure 14a shows a perspective drawing of the jig, and Figure 14b is a cross-sectional view of the jig. In Figures 13 to 18, the same constitutive components as shown in Figures 1 to 12 have the same reference numerals applied, and the corresponding description is thus abbreviated.

As illustrated in Figure 13, the encoder includes an electrical circuit unit 3, a code disc 2, and a disc hub 1. In this example embodiment, a jig is employed to adjust the location of the code disc 2. For this reason, the recesses and protrusions described above are not required. It should be appreciated that a recess is not present in the mounting surface of the object 10, and that the protruding parts are absent from electrical circuit unit 3.

Next, the procedures for assembly are explained. As illustrated in Figures 14a and 14b, the jig 9 is prepared in order to adjust the location of the code disc 2. The jig 9 includes a hollow cylinder shaped body 91 and has a flange 92 projecting in from the edge of one of the apertures. At the forward extremity of flange 92, there is an arc shaped aperture 93 concentric with the hollow body 91. Moreover, a cut-out part 94 is cut-out from the hollow body 91 and flange 92 which is fan-shaped and formed at a specific angle with respect to the center axis of the hollow body 91. In addition, the distance L2 is provided on the interior of the flange 92 and the hollow body 91, from the lower extreme surface 92a to the extreme part 95. This length L2 is designed to be less than the L1 gap by an amount L.

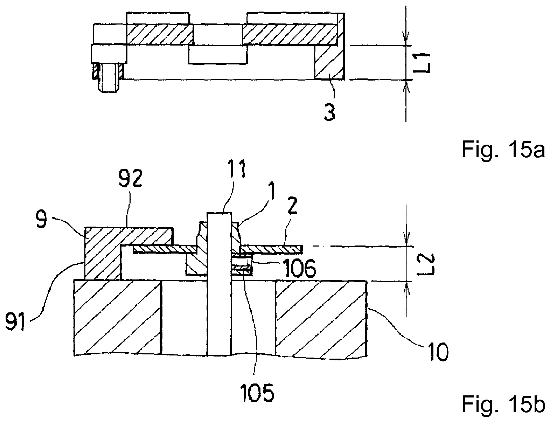

As shown in Figure 15, the disc hub 1 with the code disc 2 mounted on it is inserted from the upper side of the shaft 11 to attach the disc hub 1 to the shaft 11. At this point, the disc hub 1 is not yet in a fixed state. Then, the jig 9 is disposed above the code disc 2. At this point, the center of the hollow cylinder 91 of jig 9 is caused to overlap with the center of the disc hub 1. The aperture 93 functions as the through hole for the shaft 11. In this state, the code disc 2 which is not yet fixed to the disc hub 1 is moved to adjust its location so that it projects towards the lower surface of the flange 92. The disc hub 1 is fixed to the shaft 11 by securing screw 106.

Next, as shown in Figure 16, the jig is removed and the electrical circuit unit 3 is fixed in a predetermined position. At that point, the height L1 of the lower extreme surface of the circuit board unit of the electrical circuit unit 3 is higher by the amount of gap L. A gap of width L is caused to be generated with respect to the code disc 2 (see, e.g., Figure 18).

Accordingly, this arrangement provides a very simple manner for precisely determining the fixing location of each unit, and even operators without particular experience and skill can assemble the arrangement in a very reproducible manner. The use of a jig to determine the location does not require the cutting-out of recesses and providing protrusions as is the case described above. Thus, the continued use of existing parts and existing designs is possible with only slight modifications. Moreover, because the costs of the jig are relatively low, the resulting cost increase is not significant.

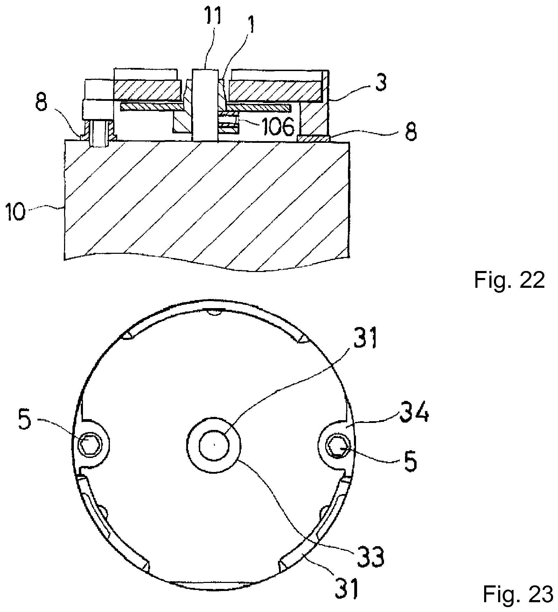

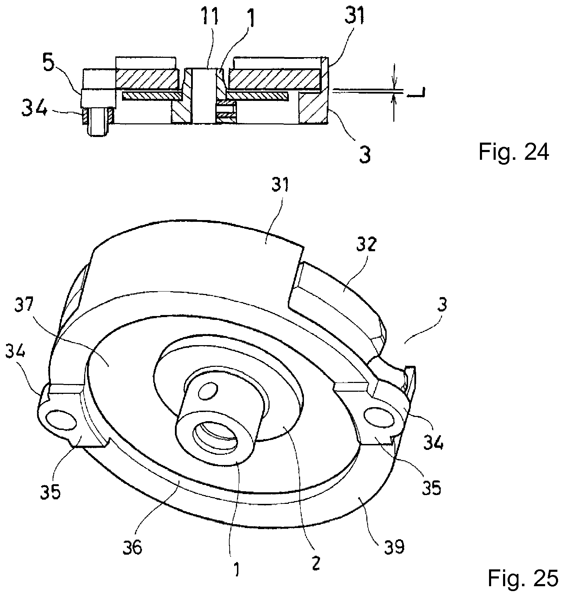

Figures 19 to 24 show an example embodiment. Figures 19 to 22 are elevational views showing the mounting processes, Figure 23 is a plan view of the assembled encoder, and Figure 24 is an elevational view of the assembled encoder. In Figures 19 to 24, the same constitutive components as shown in Figures 1 to 18 have the same reference numerals applied thereto and the description is therefore abbreviated.

As shown in Figure 19, the encoder includes an electrical circuit unit 3, a code disc 2, and a disc hub 1. In this example embodiment, a spacer is employed to adjust the location. Because of this, the use of a jig is not required.

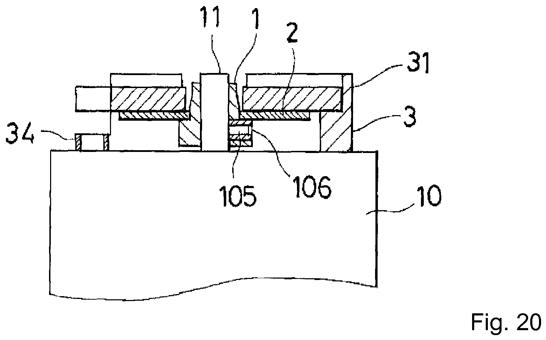

Next, the procedures for assembly are explained. As illustrated in Figure 19, the disc hub 1 with the code disc 2 mounted on it is inserted from the upper side of the shaft 11 to attach the disc hub 1 to the shaft 11. At this point, the disc hub 1 is not yet in a fixed state. Moreover, as shown in Figure 20, the electrical circuit unit 3 is disposed at the regular location on the mounting surface 16, or is mounted and if required, secured temporarily. In this state, the code disc 2 fixed to mounting surface 16 has its position adjusted so as to project toward the lower extreme surface of the circuit base board 32 of the electrical circuit unit 33. The disc hub 1 is fixed to the shaft 11 by the securing screw 106.

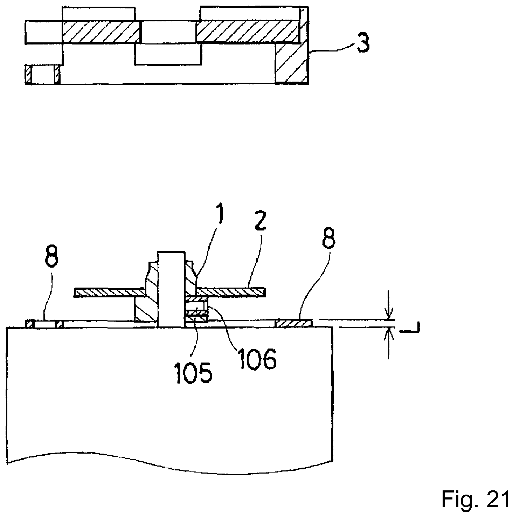

Next, as shown in Figure 21, the electrical circuit unit 3 is lifted up from the mounting surface 16 of the object to be measured 10, and a spacer 8 is disposed in the fixing location of electrical circuit unit 3. The thickness of the spacer 8 is equal to the width of gap L between the code disc 2 and the circuit base board 32. Moreover, the electrical circuit unit 3 is once more disposed on top of the spacer 8, and adjusted to correspond to the mounting hole and the mounting screw hole 14 and secured with the screw. Thus, the electrical circuit unit 3 can be raised up by the amount of the height L of the spacer 8. Then, the height of the lower extreme surface of the base board unit is also higher by the amount L of the height of the spacer 8, causing the generation of a gap L with respect to the code disc 2.

This example embodiment also provides a very simple manner of precisely determining the fixing location of each unit, and even operators without particular experience and skill can assemble in a reproducible manner. Because the electrical circuit unit 3 also functions as a jig, the employment of a special tool to determine the location is not required and it does not require special machining. Furthermore, this arrangement provides for the continued use of existing parts and designs without modification. Moreover, because the cost of the spacer used to adjust the location is very low, the resulting cost impact is minimal.

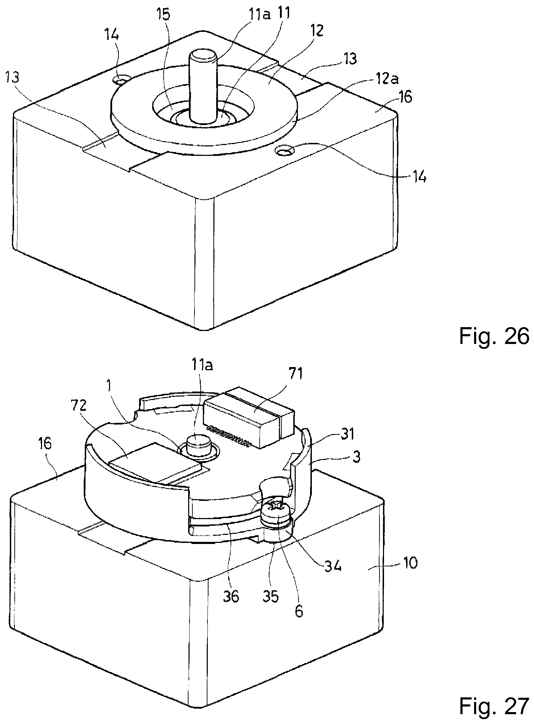

Figures 25 to 28 show an example embodiment. Figure 25 is a perspective view of the electrical circuit unit, Figure 26 is a perspective view of the object to be measured, which, in this case, is a motor, and Figure 27 is a perspective view of the adjusted state of electrical circuit unit fixed to the motor. In Figures 25 to 28, the same constitutive components as shown in Figures 1 to 24 have the same reference numerals applied thereto and the description is therefore abbreviated.

As shown in Figure 25, the electrical circuit unit 3 includes a base body 31 and a circuit board 32. The base body 31 is formed in a cylindrical shape. The base body's mounting surface towards the object to be measured has a base part 39 having a flange shape in the direction of the internal diameter of the cylinder. The base part 39 has an aperture 36 opening concentrically with the center of the cylinder, thus forming an aperture part 37 opening in the lower direction, i.e., the direction of the mounting surface. The base part 39 has a pair of mounting parts 34 formed opposite to the mounting holes. The mounting parts 34 are arranged in rotationally symmetric locations, and their lower parts have protruding parts 35 which are formed to project in the lower direction, i.e., the direction of the mounting surface.

As shown in Figure 26, the body of motor 10 forms a square cubic shape, and the shaft 11 as well as the rotation axis projects substantially from the center of the interior thereof. In the vicinity of the shaft 11, a cut-out part 15 is formed in a concentric circle in the body of the motor 10, thus removing a part of it within a specific area. In the vicinity of this cut-out part 15, a projecting part 12 is formed in a concentric crown-like circular shape over a specific area. The aperture 37 of the electrical circuit unit 3 can fit onto the projecting part 12. In other words, the outer diameter of this crown-like projecting part 12 and the inner diameter of the aperture 37 are substantially equal. When the electrical circuit unit 3 is combined with the crown, the location in the radial direction can be determined. Moreover, screw holes 14 are formed in the flat mounting surface 16 of the motor body in order to fix the electrical circuit unit 3 thereto. In addition, a recess 13 is formed bordered by parallel lines outside of the crown-like projection, on both sides of the shaft in a band like region extending to the edges.

Next, the assembly procedures are explained, although reference to the mounting procedures described above with respect to Figures 7 to 12 should be made. As shown in Figure 27, the electrical circuit unit 3 is disposed so that the protruding part 35 of the electrical circuit unit 3 fits into the location of the recessed part 13 of the main body of the motor. At this point, by the crown-like configuration, because the location in the radial direction is fixed, only the adjustment of the height of the code disc 2 is performed. The adjustment can be performed from the cut-out part formed in the base of the electrical circuit unit. Connectors 71 and circuit elements 72 may be mounted on the circuit board 32 to connect them with external circuits.

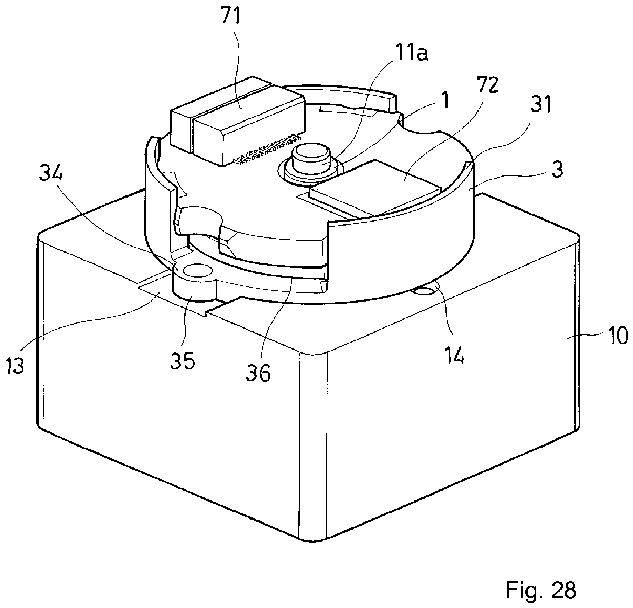

Next, after the adjustment and fixing of the code disc 2 is finished, as shown in Figure 28, the electrical circuit unit 3 is raised up and revolved by 90º and matched with the location of the fixing screw holes 14 on the mounting part 34 and fixed with the mounting screws 5. Thus, the gap of the code disc 2 is adjusted. In this example embodiment, a crown-like configuration is employed but it is not always necessary, and by securing with screws alone the location determination function can be achieved, and other location determining mechanisms may also be employed.

The mounting method of the modular rotary encoder and the modular rotary encoder which may be mounted by the method described herein may be widely employed. For example, the method may be used with encoders for detecting the displacement amount, the number of revolutions, the revolution speed of an object, which may be a rotatable body such as motor, an internal combustion engine, or a hand wound device, etc. It is not limited to the output of incremental or absolute signals, and it can be used with any type. Moreover, it is not limited to a certain type of scanning principle such as optical, magnetic, or inductive scanning principles. because the cost of the spacer used to adjust the location is very low, the resulting cost impact is minimal.

Figures 25 to 28 show an example embodiment of the present invention. Figure 25 is a perspective view of the electrical circuit unit, Figure 26 is a perspective view of the object to be measured, which, in this case, is a motor, and Figure 27 is a perspective view of the adjusted state of electrical circuit unit fixed to the motor. In Figures 25 to 28, the same constitutive components as shown in Figures 1 to 24 have the same reference numerals applied thereto and the description is therefore abbreviated.

As shown in Figure 25, the electrical circuit unit 3 includes a base body 31 and a circuit board 32. The base body 31 is formed in a cylindrical shape. The base body's mounting surface towards the object to be measured has a base part 39 having a flange shape in the direction of the internal diameter of the cylinder. The base part 39 has an aperture 36 opening concentrically with the center of the cylinder, thus forming an aperture part 37 opening in the lower direction, i.e., the direction of the mounting surface. The base part 39 has a pair of mounting parts 34 formed opposite to the mounting holes. The mounting parts 34 are arranged in rotationally symmetric locations, and their lower parts have protruding parts 35 which are formed to project in the lower direction, i.e., the direction of the mounting surface.

As shown in Figure 26, the body of motor 10 forms a square cubic shape, and the shaft 11 as well as the rotation axis projects substantially from the center of the interior thereof. In the vicinity of the shaft 11, a cut-out part 15 is formed in a concentric circle in the body of the motor 10, thus removing a part of it within a specific area. In the vicinity of this cut-out part 15, a projecting part 12 is formed in a concentric crown-like circular shape over a specific area. The aperture 37 of the electrical circuit unit 3 can fit onto the projecting part 12. In other words, the outer diameter of this crown-like projecting part 12 and the inner diameter of the aperture 37 are substantially equal. When the electrical circuit unit 3 is combined with the crown, the location in the radial direction can be determined. Moreover, screw holes 14 are formed in the flat mounting surface 16 of the motor body in order to fix the electrical circuit unit 3 thereto. In addition, a recess 13 is formed bordered by parallel lines outside of the crown-like projection, on both sides of the shaft in a band like region extending to the edges.

Next, the assembly procedures are explained, although reference to the mounting procedures described above with respect to Figures 7 to 12 should be made. As shown in Figure 27, the electrical circuit unit 3 is disposed so that the protruding part 35 of the electrical circuit unit 3 fits into the location of the recessed part 13 of the main body of the motor. At this point, by the crown-like configuration, because the location in the radial direction is fixed, only the adjustment of the height of the code disc 2 is performed. The adjustment can be performed from the cut-out part formed in the base of the electrical circuit unit. Connectors 71 and circuit elements 72 may be mounted on the circuit board 32 to connect them with external circuits.

Next, after the adjustment and fixing of the code disc 2 is finished, as shown in Figure 28, the electrical circuit unit 3 is raised up and revolved by 90° and matched with the location of the fixing screw holes 14 on the mounting part 34 and fixed with the mounting screws 5. Thus, the gap of the code disc 2 is adjusted. In this example embodiment, a crown-like configuration is employed but it is not always necessary, and by securing with screws alone the location determination function can be achieved, and other location determining mechanisms may also be employed.

The mounting method of the modular rotary encoder and the modular rotary encoder which may be mounted by the method described herein may be widely employed. For example, the method may be used with encoders for detecting the displacement amount, the number of revolutions, the revolution speed of an object, which may be a rotatable body such as motor, an internal combustion engine, or a hand wound device, etc. It is not limited to the output of incremental or absolute signals, and it can be used with any type. Moreover, it is not limited to a certain type of scanning principle such as optical, magnetic, or inductive scanning principles.

## Claims

1. A method for mounting a modular rotary encoder on an object (10) to be measured, the modular rotary encoder including a code disc (2) with a mounting hole (22) and an electrical circuit unit (3), comprising:
attaching a disc hub (1) to a rotating shaft (11) which is coupled with the object (10) to be measured;
fixing the disc hub (1) to the tip of the rotating shaft (11) with a terminal locking mechanism;
after attaching and fixing the disc hub (1), pressing the mounting hole (22) of the code disc (2) onto a disc hub attachment part;
adjusting a position of the code disc (2) along a rotational axis of the shaft (11) to cause a distance to the object (10) to be measured to correspond to a predetermined value by sliding the code disk (2) on the disk hub (1) in the axial direction of the rotation axis of the shaft (11), the press fit connection between the code disk (2) and the disc hub (1) arranged such that there be sufficient frictional force to hold the code disk (1) on the disk hub (1);
after the adjusting, fixing the electrical circuit unit (3) to the object (10) to be measured.

2. The method according to claim 1, wherein the position adjustment is performed using at least one of (a) spacer and (b) a jig.

## Patentansprüche

1. Verfahren zum Montieren eines modularen Drehgebers an einem zu messenden Objekt (10), wobei der modulare Drehgeber eine Codierscheibe (2) mit einem Montageloch (22) und eine elektrische Schaltkreiseinheit (3) beinhaltet, welches Folgendes umfasst:
Anbringen einer Scheibennabe (1) an einer Drehwelle (11), die mit dem zu messenden Objekt (10) gekoppelt ist;
Fixieren der Scheibennabe (1) an der Spitze der Rotationswelle (11) mit einem endständigen Arretierungsmechanismus;
nach dem Anbringen und Fixieren der Scheibennabe (1) Pressen des Montagelochs (22) der Codierscheibe (2) auf einen Scheibennabenanbringungsteil;
Anpassen einer Position der Codierscheibe (2) entlang einer Rotationsachse der Welle (11), um zu bewirken, dass ein Abstand des zu messenden Objekts (10) einem vorbestimmten Wert entspricht, indem die Codierscheibe (2) auf die Scheibennabe (1) in der axialen Richtung der Rotationsachse der Welle (11) verschoben wird, wobei die Presspassungsverbindung zwischen der Codierscheibe (2) und der Scheibennabe (1) so eingerichtet ist, dass es eine ausreichende Reibungskraft gibt, um die Codierscheibe (1) auf der Scheibennabe (1) zu halten;
nach dem Anpassen Fixieren der elektrischen Schaltkreiseinheit (3) an dem zu messenden Objekt (10).

2. Verfahren nach Anspruch 1, wobei die Positionsanpassung unter verwendung von (a) einem Abstandshalter und/oder (b) einer Haltevorrichtung durchgeführt wird.

## Revendications

1. Procédé d'installation d'un codeur rotatif modulaire sur un objet (10) à mesurer, le codeur rotatif modulaire comprenant un disque codeur (2) comportant un orifice d'installation (22) et une unité de circuit électrique (3), comprenant :
fixer un moyeu de disque (1) à un arbre rotatif (11) qui est accouplé à l'objet (10) à mesurer ;
assujettir le moyeu de disque (1) à l'extrémité de l'arbre rotatif (11) au moyen d'un mécanisme de blocage d'extrémité ;
après la fixation et l'assujettissement du moyeu de disque (1),
presser l'orifice d'installation (22) du disque codeur (2) sur une partie de fixation de moyeu de disque ;
ajuster une position du disque codeur (2) le long d'un axe de rotation de l'arbre (11) de telle sorte qu'une distance de l'objet (10) à mesurer corresponde à une valeur prédéterminée en faisant glisser le disque codeur (2) sur le moyeu de disque (1) dans la direction axiale de l'axe de rotation de l'arbre (11), le raccordement serré du disque codeur (2) et du moyeu de disque (1) étant conçu de telle sorte qu'il y ait une force de frottement suffisante pour maintenir le disque codeur (1) sur le moyeu de disque (1) ;
après l'ajustement, assujettir l'unité de circuit électrique (3) à l'objet (10) à mesurer.

2. Procédé selon la revendication 1, dans lequel l'ajustement de la position est effectué au moyen (a) d'une entretoise et/ou (b) d'un gabarit.
